# EUROPEAN PATENT SPECIFICATION

(11) **EP 1 210 824 B1**
(45) Date of publication and mention of the grant of the patent: **03.03.2004**
(21) Application number: 00955573.1
(22) Date of filing: 15.08.2000
(51) Int. Cl.: H04N 7/24, H04N 5/00

(54) **METHOD AND SYSTEM FOR AUTOMATICALLY PURGING CODE OBJECTS BEING UPDATED BY DOWNLOAD**
VERFAHREN UND SYSTEM ZUR AUTOMATISCHEN BEREINIGUNG VON KODEOBJEKTEN, DIE DURCH HERUNTERLADEN AKTUALISIERT WERDEN
TECHNIQUE ET SYSTEME D'ELIMINATION AUTOMATIQUE D'OBJETS CODES MIS A JOUR PAR TRANSFERT

(30) Priority: 16.08.1999 US 148691 P; 17.07.2000 US 618074
(43) Date of publication of application: 05.06.2002
(73) Proprietor: General Instrument Corporation, Horsham, Pennsylvania 19044 (US)
(72) Inventor: POLI, Christopher, Doylestown, PA 18901 (US); DEL SORDO, Christopher, S., Soudertown, PA 18964 (US); BATES, Thomas, F., IV, Richboro, PA 18954 (US); MAKOFKA, Douglas, S., Willow Grove, PA 19090 (US); LEHRMAN, Ira, S., Littleton, CO 80124 (US)
(74) Representative: Cooper, John
(86) International application number: PCT/US2000/022404
(87) International publication number: WO 2001/013644

(56) References cited:
- EP-A- 0 907 285
- WO-A-98/43415
- US-A- 5 440 632
- US-A- 5 666 293
- US-A- 5 798 785
- US-A- 5 835 911
- US-A- 5 859 977

## Description

### FIELD OF THE INVENTION

The present invention relates to the field of programming or re-programming a set-top terminal in a cable television system. More particularly, the present invention relates to the field of controlling the download of programming, such as an operating system or native suite objects, for a set-top terminal over the cable network for initial or upgrade programming of the set-top terminal.

### BACKGROUND OF THE INVENTION

In a typical cable television system, subscribers are provided with a set-top box or terminal. The set-top terminal is a box of electronic equipment that is used to connect the subscriber's television, and potentially other electronic equipment, with the cable network. The set-top box is usually connected to the cable network through a co-axial wall outlet.

The set-top box is essentially a computer that is programmed to process the signals from the cable network so as to provide the subscriber with the cable services. These services from the cable television company typically include access to a number of television channels and, perhaps, an electronic programming guide (EPG). Additional premium channels may also be provided to subscribers for an additional fee. Pay-per-view events and video-on-demand service may also be provided over the cable network. The set-top box is programmed to provide these services to the subscriber.

However, the services of the cable company need not be limited to providing television programming. Some cable companies are now offering internet access and e-mail service over their cable networks at speeds much faster than are available over conventional telephone lines. It is anticipated in the future that more and more services will be provided over the cable network, including perhaps even basic telephone service. Eventually, each home or office may have a single connection, via the cable network, to all electronic data services.

As the cable network and the services provided evolve, the set-top terminal must also evolve so as to be able to provide subscribers with all the services available from the cable network that are of interest to those subscribers. This set-top box evolution will primarily involve changes to the programming of the set-top box. By upgrading the software or firmware of the set-top box, the box can be made to perform more efficiently or offer new services as the cable network evolves.

In order to upgrade the population of set-top boxes on a cable network, it is preferable to transmit the new programming to the set-top boxes via the cable network itself. Otherwise, a technician must visit each subscriber to upgrade or re-program that subscriber's set-top box. Such field upgrades would obviously be at significant expense.

The headend is the facility from which the cable network operator broadcasts television signals and provides other services over the cable network. Updated software that is provided to the population of set-top terminals is broadcast from the headend over the cable network. The headend may also broadcast messages or instructions over the cable network to the set-top terminals.

As used herein, a programming code object, or code object, refers to an individual program, i.e. a piece of software or firmware, that can be downloaded to and executed by a set-top terminal. More broadly, a data object refers to any data structure, including a code object, message or instruction, that is transmitted by the headend over the cable network to one or more set-top terminals.

Frequently, in order to provide new services or to upgrade the programming in a set-top terminal, the set-top terminal must acquire several new code objects, i.e., pieces of software or firmware. These various pieces of programming may frequently interact and require each other in order to function properly. Consequently, problems arise if the set-top terminal acquires some, but not all, of the code objects that are to be downloaded as part of the programming upgrade. When the set-top terminal begins running the newly-acquired code objects, those code objects may likely function improperly or not at all due to the absence of other interdependent code objects that the set-top terminal was to have acquired and executed.

Alternatively, implementing a new service or enhancing the operation of the set-top terminal may involve replacing a older version of a piece of programming, i.e. a code object, on the terminal with a newer, improved version. Conversely, it may be the case that a newly implemented version of a code object is found to operate improperly or cause problems with the system thereby causing the system operator to want to revert to the earlier version of the object until the problems with the new version can be resolved.

In any of these instances, a set-top terminal may have two versions of the same code object to manage after acquiring the newer (or perhaps older) version in response to an instruction to do so from the system operator. Consequently, there is a need in the art for a method and system of controlling the download of code objects by a set-top terminal in a cable television system so as to prevent potential conflicts and the unnecessary consumption of memory associated with managing two different versions of the same code object.

EP-A-0,907,285 discloses a CATV system in which software can be downloaded from a headend to selected ones of set-top boxes. The software may have a variety of version numbers, and the set-top box compares the version number of a received software object with the version number of any corresponding software object already resident. However, this prior document does not provide for the headend exercising control over whether or not an earlier version is deleted from the set-top box.

### SUMMARY OF THE INVENTION

It is an object of the present invention to meet the above-described needs and others. Specifically, it is an object of the present invention to provide a method and system of controlling the download of code objects by a set-top terminal in a cable television system so as to prevent potential conflicts and the unnecessary consumption of memory associated with managing two different version of the same code object.

Accordingly, the invention provides a method of managing multiple versions of a code object being downloaded to a set-top terminal, the method comprising:
receiving a download instruction message from a headend, said set-top terminal receiving said download instruction message, said download instruction message including a download version number and a purge enable flag; and
comparing said download version number with a resident version number, said set-top terminal comparing said download version number with a resident version number, said download version number specifying the version of a download code object and said resident version number specifying the version of a resident code object, said resident code object being present within memory of said set-top terminal,
wherein when said step of comparing concludes that said download version number and said resident version number are different, said set-top terminal receives said download code object from said headend and deletes said resident code object from said memory, said headend using said purge enable flag
for instructing said set-top terminal to delete said resident code object from said memory.

From another aspect the present invention provides a system for managing multiple versions of a code object comprising:
a headend and a set-top terminal,
wherein said set-top terminal receives a download instruction message from said headend, and compares said download version number with a resident version number,
wherein said download instruction message includes a download version number and a purge enable flag, said download version number specifying the version of a download code object and said resident version number specifying the version of a resident code object, said resident code object being present within memory of said set-top terminal, and
wherein when the comparison concludes that said download version number and said resident version number are different, said set-top terminal receives said download code object from said headend and deletes said resident code object from said memory, said headend using said purge enable flag for instructing said set-top terminal to delete said resident code object from said memory.

Preferred features and advantages of the invention will be apparent from the claims and the following description.

### BRIEF DESCRIPTION OF THE DRAWINGS:

The accompanying drawings illustrate the present invention and are a part of the specification. Together with the following description, the drawings demonstrate and explain the principles of the present invention.

Fig. 1is a flowchart showing the basic sequence in which programming objects are acquired by the set-top terminal according to a related invention.

Fig. 2 is a block diagram of the basic elements of a cable television system with which the present invention is practiced.

Fig. 3 is a flowchart showing a method of controlling and enabling a list of downloaded code objects.

Fig. 4 is a graphic illustration of a download control message.

Fig. 5 is a flowchart showing a method of managing multiple versions of a code object being downloaded by a set-top terminal in a cable television system according to the present invention.

### DETAILED DESCRIPTION OF THE INVENTION:

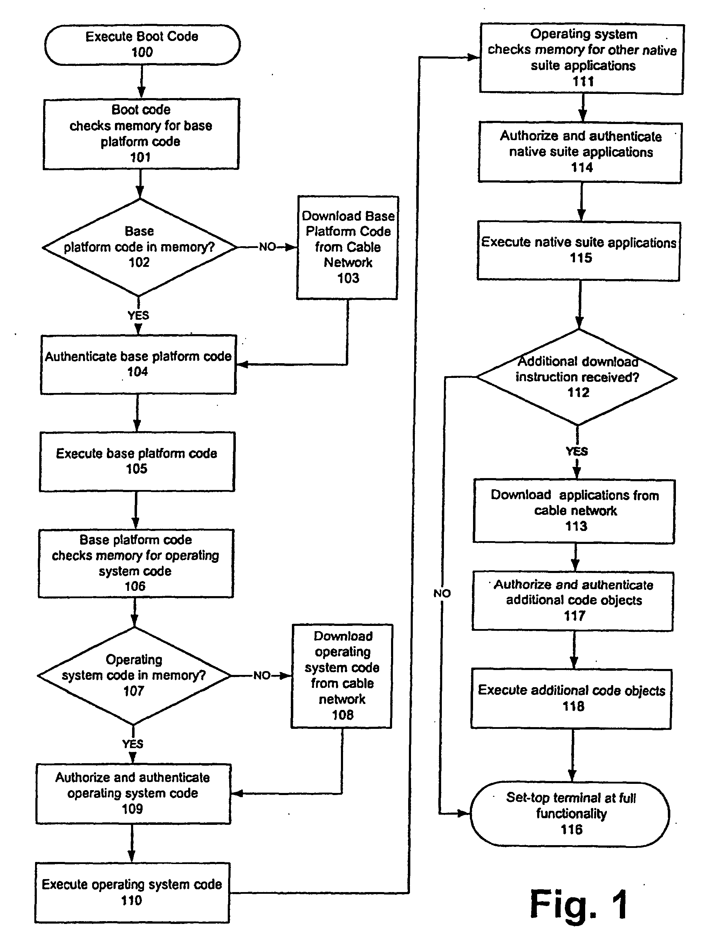

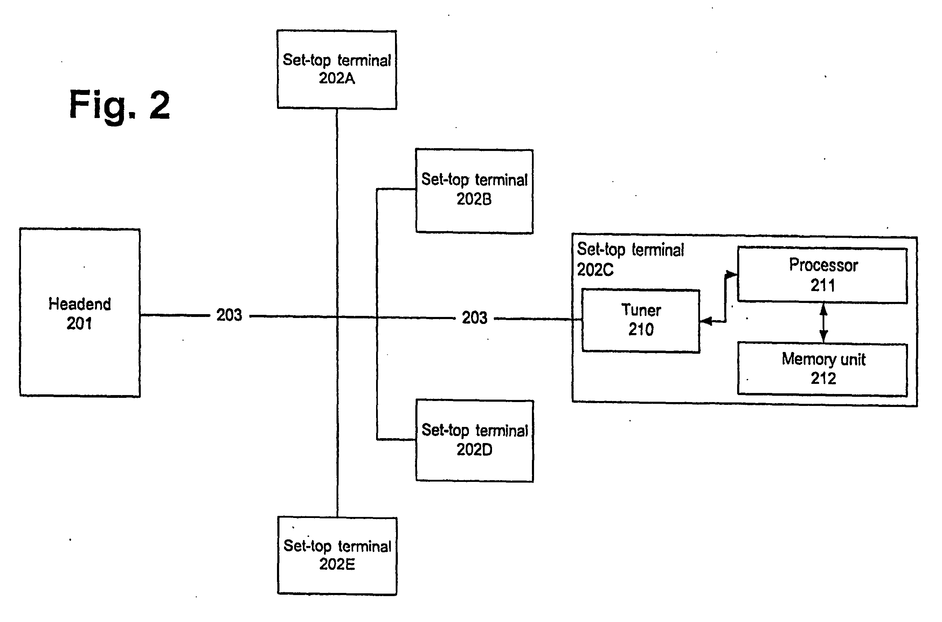

A related patent application, U.S. Serial No. 60/130,328 comprehensively describes a proprietary method and system for downloading programming objects to set-top terminals in a cable system. Fig. 1 is a flowchart that illustrates the basic sequence in which programming objects are acquired by the set-top terminal over the cable system according to that method. Fig. 2 is a block diagram showing the basic elements of a cable television system which operates using the present invention.

With references to Figs. 1 and 2, a set-top terminal (202; Fig. 2) executes an automatic boot process immediately following connection of power to the set-top terminal. As shown in Fig. 1, the boot process begins with the set-top terminal executing a piece of programming known as the boot code (100). The boot code is a programming object that is factory-loaded into the read-only memory (ROM) of the set-top terminal. As with all programming executed by the set-top terminal (202), the boot code is stored in the memory unit (212; Fig. 2) and executed by the processor (211; Fig. 2)

In another alternative, the set-top terminal (202) may not initiate the boot process shown in Fig.1 until both power and a data transport stream from the headend (201; Fig. 2) have been connected to the terminal (202). The set-top terminal may also execute the boot code (100) in response to a reset signal received, for example, from the headend (201), i.e., the system operator.

When running, the boot code provides minimal programming for the set-top terminal (202) to allow the terminal to bring itself up to full functionality. The boot code does not typically allow the set-top terminal (202) to provide any services, but is designed only to acquire, if necessary, and load higher-level programming. The term "boot code" as used herein comprises the minimal code needed to accomplish this functionality.

As shown in Fig. 1, the boot code will first acquire the base platform code (101-105). The boot code will first check the memory (212; Fig. 2) of the set-top terminal (202) to determine if the base platform code is stored there (101, 102). If the base platform code is in memory, the processor (211; Fig. 2) of the set-top terminal (202) running the boot code will authenticate the base platform code (104) and, assuming the code passes the authentication process, will begin executing the base platform code (105).

If the base platform code is not in memory (102), the set-top terminal (202) will access the data transport stream from the headend (201; Fig. 2), locate a transmission of the base platform code within the headend signal using the tuner (210; Fig. 2) and download the base platform code (103). The base platform code is preferably transmitted to the set-top terminal on an out-of-band transport stream for storage in a Flash memory portion of the memory unit (212). However, the base platform code may be transmitted on an in-band control channel.

The downloaded platform code is then authenticated (104), as before, and executed. The boot code will preferably re-authenticate the base platform code every time it launches the base platform object regardless of whether the base platform code has been found in memory (212) or downloaded.

Once the base platform code is launched, control of the terminal (202) passes to the base platform code from the boot code. When executing the base platform code, the set-top terminal (202) can provide minimal functionality to subscribers, for example, allowing the subscriber to receive television programming from the cable system. However, in order for the set-top terminal to attain full functionality, the base platform code must acquire an additional programming known as the native suite. The native suite comprises an operating system object and, usually, additional application programs. These additional or "resident" applications are computer programs that run on the set-top terminal under the operating system. The resident applications provide the capabilities of the set-top terminal that are in addition to watching television.

As shown in Fig.1, the base platform code, when first executed or reset by a signal from the headend, checks (106, 107) the memory unit (212) to determine if an operating system code object is already resident in the terminal (202). The operating system (O/S) is typically code from a third party (such as Microsoft's WinCE™) that allows the set-top terminal (202) to run the various resident applications of the native suite. The operating system code typically uses an additional embedded code module provided by the manufacturer of the set-top terminal which interfaces the operating system with the particular hardware of that set-top terminal to enable the operating system to function with that specific set-top terminal.

If the operating system code object is found in memory, the base platform code authorizes and authenticates the operating system code (109) from memory. If the operating system code is not in memory, the set-top terminal (202) running the base platform code, will access the data transport stream from the headend (201), and locate and download an appropriate operating system code object (108). The downloaded object is then authorized and authenticated (109).

Once authorized and authenticated, the operating system code is executed (110). When running the operating system code, the set-top terminal can also execute the additional code objects or applications of the native suite that provide any variety of services to subscribers. The base platform code can be configured to acquire all the elements of the native suite along with the operating system. Alternatively, as illustrated in Fig. 1, the operating system, when running, may be configured to acquire other applications.

Preferably, the processor (211) running the operating system code first checks the memory unit (212) for the expected elements of the native suite (111). If the native suite applications are in memory (112), the operating system can authorize and authenticate those applications (114) and execute them (115). The processor (211) will then determine if it has been instructed to acquire any additional objects (112), including native suite applications not found in memory. If not, the set-top terminal is at full functionality (116). If, however, the processor (211) needs to acquire additional objects, those applications are downloaded from the cable network (113). The downloaded application objects are authorized and authenticated (117), and executed (118).

Once the operating system and other native suite applications are running, the set-top terminal has achieved full functionality (116). As will be clear to those skilled in the art, the list of native suite applications may vary from set-top terminal to set-top terminal. A subscriber who subscribes to fewer services from the cable system may need fewer native suite applications than a subscriber who pays for all the services available. Additionally, as new services are added, applications may be added to the native suite to support the new services. Thus, the list of applications, which constitute the native suite, can vary with both time and subscriber needs and preferences.

As noted above, the base platform code may acquire the native suite consisting of the operating system and resident applications during initialization of the set-top terminal or upon receipt of an instruction to do so from the system operator. Consequently, when the system operator desires to alter or upgrade the operating system or resident applications in the set-top terminal, the system operator may send an initialization message to the set-top terminal via the cable network which instructs the base platform code to acquire or reacquire the operating system and resident applications then being broadcast over the cable network. Alternatively, the system operator can signal the operating system to acquire or re-acquire elements of the native suite. These messages from the headend (201) may also be, at the same time, altering the list of elements that define the terminal's native suite.

While this arrangement allows the capabilities of the set-top terminal to be readily upgraded, altered or enhanced, interruptions to service for the set-top user may also result. For example, when the base platform code or operating system code receives an instruction to acquire new code objects over the cable network, that instruction will specify the code object or objects which are to be acquired. If more than one object is to be acquired, a problem may result if only one of the objects is actually received by the set-top terminal (202).

Specifically, the terminal (202) may receive and enable the first code object which it has been instructed to acquire. If then, for whatever reason, the set-top terminal is unable to acquire the other code objects that it has been instructed to download, the functions performed by those unreceived code objects will be unavailable to the set-top terminal user. Moreover, code objects are frequently inter-related. Consequently, the object that has been downloaded may not function properly without the other objects that were to have been downloaded, but were not received. Similarly, enablement and execution of the new code object which has been received may interfere with the execution of the software or firmware previously resident on the set-top terminal if the other objects specified for download are not acquired and executed as well.

Therefore, as noted above, there is a need in the art for a method of controlling the download of code objects by a set-top terminal in a cable television system so as to prevent the execution of newly-acquired code objects that require the presence of other code objects which the set-top terminal was supposed to have acquired but was unable, for whatever reason, to download. The present invention overcomes this possible problem, in the following manner.

The set-top terminal (202) running the base platform or operating system code will identify the list of objects it has been instructed to acquire. Typically, this list will be a complete list of the objects in the native suite. However, it is possible that the list of objects to be acquired may represent only a portion of the native suite.

The list of objects to be acquired and the instruction to acquire them may come from either a message received from the system operator via the headend (201) or may be part of the terminal's programming, either base platform or operating system code. In either case, the set-top terminal (202) will begin acquiring the listed objects from the transport stream received over the cable system (203) from the headend (201). The terminal (202) will not, however, enable or execute any of the received objects until all the objects listed to be acquired have been successfully received. The programming managing the download, e.g., the base platform code or the operating system code, is modified or reconfigured to require successful acquisition of all listed code objects before any of the objects are enabled and executed. In this way, the set-top terminal (202) will not end up with only a fraction of the objects it has been instructed to acquire and execute, or with an object that conflicts with programming already resident.

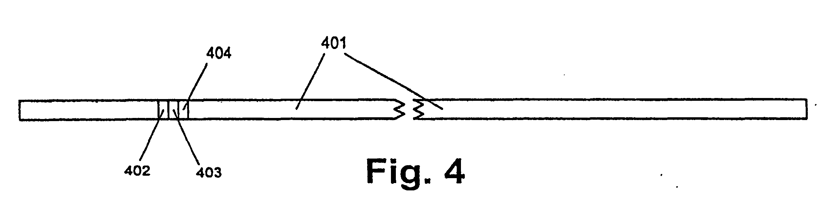

A graphic illustration of a message instructing a set-top terminal to download new or additional code objects is presented in Fig. 4. As shown in Fig. 4, the message (401) may also contain a list-only enable flag (402) that will instruct the set-top terminal (202) whether it must enable only the entire list of objects being acquired or can accept, enable and execute object representing only a fraction of those listed as to be acquired. This list-only enable flag (402) need only be a single bit within the message (401) and is, of course, either affirmative (i.e., "present" or "on") or negative (i.e., "not present" or "off"). In other words, if the list-only enable flag is present, all of the objects received are enabled simultaneously or nearly simultaneously. Therefore, no objects will be enabled until all the objects in the list have been properly received. The simultaneous enablement of all the received objects will create the least possible disruption in service to the user of the set-top terminal.

In addition to enabling and executing the received code objects only when all listed objects have been received, the set-top terminal (202) may be programmed to purge listed objects from memory that have been received if all program objects in the object group are not received. In other words, if the set-top terminal (202) begins acquiring a list of objects that it has been instructed to acquire, and not all of the listed objects are eventually received, it may be desirable to remove from memory any of the objects that were acquired but which will not be used or enabled due to the failure to acquire all objects in the object group. Consequently, as an option of the present invention, the set-top terminal (202) may be programmed to delete from memory any code objects which have been acquired as a list of objects to be received in the event that not all listed objects are eventually received, enabled and used.

The set-top uses the list identifier and the list version to identify those objects that comprise the defined object suite (most recent list of objects from the download message). If an object is added or removed from a list in a download message, the set-top will update its suite of objects in memory associated with that list by adding or removing those object(s). In addition, the list version can be used to force the upgrade of an object where the object version identified in the list of the download message is different than the object version that the set-top has in memory.

This function of purging different versions of objects in a list may also be governed by a flag (403), i.e. an auto purge flag, within the message (401) from the headend. Again, the flag (403) need only be a single bit that represents that the flag is either present or not present within the message. In this way, the system operator has the option of clearing the set-top terminal's memory (212) of all the listed objects of a different version than that specified in the download message.

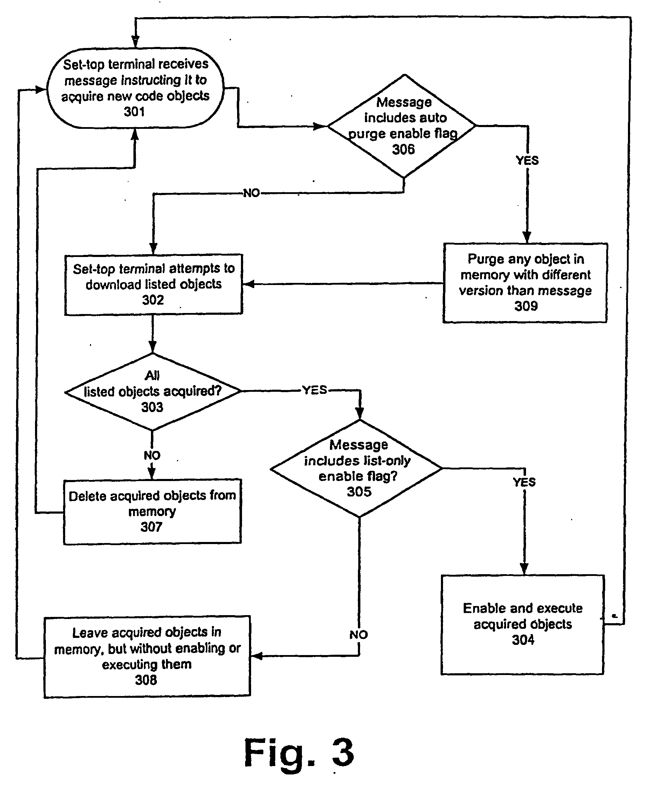

This process is outlined in Fig. 3. As shown in Fig. 3, the method of the present invention begins with the set-top terminal receiving a message instructing it to acquire new or additional code objects from the cable system (301). The set-top terminal first checks to see if the auto purge flag is present or positive in the message (306). If so, the terminal purges objects appropriately that are different versions of an object specified for download in the incoming message (309). After the purging, or if the auto purge flag is negative (306), the set-top attempts to download the code objects listed in the message (302).

When the downloading is complete or has otherwise been terminated, perhaps by a time-out counter, the terminal will determine if all the objects it was instructed to acquire were successfully downloaded. (303). If the terminal failed to acquire all the specified objects, the terminal may delete all the objects that were acquired from memory (307).

If, on the other hand, all the objects have been acquired, the set-top terminal can proceed to enable and execute the objects. The terminal first check for the list-only enable flag (305). If the list enable flag is present or positive, the enablement of the downloaded objects is preferably performed simultaneously or nearly simultaneously, thereby treating the objects on the list as though they were a single object (304).

If the list enable flag is negative, but all objects have been received successfully, the set-top will leave the acquired objects in memory, but without enabling or executing them (308). If only some of the objects that were to be acquired as successfully received (303), the set-top terminal will delete all objects on the list (307).

Under the principles of the present invention, then, a native or operating suite which consists of a number of code objects can be transmitted and used by the set-top terminals in a cable television system for all intents and purposes as though the suite were a single code object. This feature of the present invention allows system operators to minimize disruptions to service and confusion which might otherwise result when the set of code objects are only partially downloaded successfully.

Another aspect of the present invention involves the management within the set-top terminal of multiple versions of an object that result from a download to the terminal in response to an instruction from the headend. Objects may be identified uniquely within a system environment by an object identifier and object version (i.e., object_name and object_version). This object_name is unique within the download transport stream(s) available to an individual set-top terminal (202). The download instruction message, which instructs the set-top terminal (202) to acquire a list of objects, may also identify both the object name/unique identifier and the version of the object desired. If the set-top already has that particular object, but a different version, it may be desirable to remove the object currently resident in the set-top terminal, and acquire the version identified in the instruction message. Preferably, the instruction message from the system operator which initiates the acquisition of new code objects also includes a version purge enable flag (404) that instructs the set-top terminal whether to automatically purge code objects already resident in the set-top terminal's memory which are identified in the message's object list by a unique object identifier (i.e., object_name), but which are a version other than that listed in the message's object list (i.e., object_version).

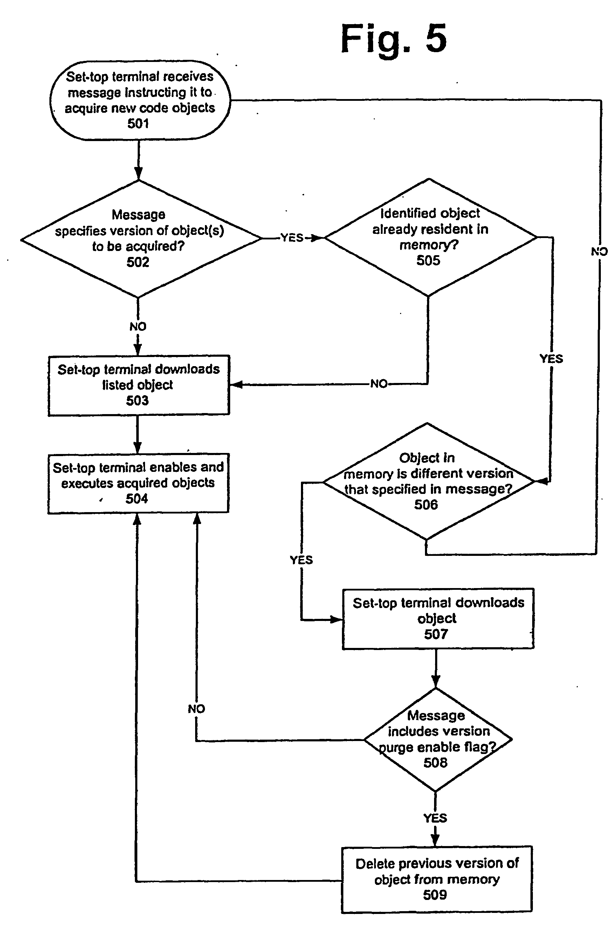

This aspect of the present invention is detailed in Fig. 5. As shown in Fig. 5, the set-top terminal (202) receives the download instruction message directing the terminal to download one or more code objects from the cable system (501). The set-top terminal will first determine if, in addition to identifying objects for download, the download instruction message also specifies a version of the object to be downloaded. (502). If the download instruction message does not specify object version, the set-top terminal proceeds to download, enable and execute the code objects as instructed (503, 504).

If the download instruction message does specify the version of a code object or objects to be acquired, the set-top terminal (202) will check its memory (212) to determine if the object to be download is already resident in memory (212). If the object is not in memory (212), the set-top terminal (202) proceeds to execute the download instructions and acquires the object (503). Conversely, if the identified object is in memory (212), the set-top terminal (202) checks the version of the object in memory against the version specified by the download instruction message for the object to be acquired (506).

If the version of the object in memory matches the version of the object the terminal has been directed to acquire, the set-top terminal (202) can ignore the direction to download that code object because the desired version of the object is already in memory (212). This assists the system operator when, for example, new set-top terminals are added to the cable system with newer versions of code objects already installed. The system operator can instruct the older terminals to acquire the newer version of the code object, with the instruction being appropriately ignored by newer terminals already having the object.

If the object in memory is a different version, either newer or older, than the version specified for download in the download instruction message, the set-top terminal acquires the specified object (507). The terminal then checks the download instruction message for a version purge enable flag (508). This flag (404) operates similarly to the flags discussed earlier and is illustrated in Fig. 4. As with the other flags discussed herein, the version purge enable flag (404) need only be one binary bit to indicate whether the set-top terminal should automatically delete from memory code object which bears the same identifier, but is a different version, that the code object that has been downloaded as directed by the download instruction message.

If the version purge enable flag (404) is present or affirmative, the set-top terminal (202) automatically deletes from memory any version of the acquired object that does not match the version of that object specified in the download instruction message (509). The newly-acquired version of the object is then enabled and executed (504).

In this way, potential conflicts and wasted memory that may result from the set-top terminal having two different versions of the same code object are eliminated.

The preceding description has been presented only to illustrate and describe the invention. It is not intended to be exhaustive or to limit the invention to any precise form disclosed. Many modifications and variations are possible in light of the above teaching.

The preferred embodiment was chosen and described in order to best explain the principles of the invention and its practical application. The preceding description is intended to enable others skilled in the art to best utilize the invention in various embodiments and with various modifications as are suited to the particular use contemplated.

## Claims

1. A method of managing multiple versions of a code object being downloaded to a set-top terminal (202), the method comprising:
receiving (501) a download instruction message from a headend (201), said set-top terminal (202) receiving said download instruction message (501), said download instruction message including a download version number and a purge enable flag (404); and
comparing (506) said download version number with a resident version number, said set-top terminal (202) comparing said download version number with a resident version number, said download version number specifying the version of a download code object and said resident version number specifying the version of a resident code object, said resident code object being present within memory (212) of said set-top terminal (202),
wherein when said step of comparing (506) concludes that said download version number and said resident version number are different, said set-top terminal (202) receives said download code object (507) from said headend (201) and deletes said resident code object from said memory (212), said headend (201) using said purge enable flag (404) for instructing said set-top terminal (202) to delete said resident code object from said memory (212).

2. The method of claim 1, wherein said headend (201) controls the deletion of said resident code object from said memory (212).

3. The method of claim 1 or claim 2, wherein said set-top terminal (202) deletes said resident code object from said memory (212) after receiving said download code object (507) from said headend (201).

4. The method of any preceding claim, wherein said comparing (506) step is performed when a resident code object is located within said memory (212).

5. The method of any preceding claim, wherein said set-top terminal (202) receives said purge enable flag (404).

6. The method of any preceding claim, wherein when said step of comparing (506) concludes that said download version number and said resident version number are identical, said set-top terminal (202) abstains from downloading said download code object.

7. The method of any preceding claim, wherein prior to said step of comparing (506), said set-top terminal (202) determines (502) if said download instruction message includes said download version number and determines (505) if a resident code object is present within memory (212) of said set-top terminal (202).

8. The method of any preceding claim, wherein said download instruction message includes an object identifier, and wherein said step of comparing said download version number with said resident version number (506) is performed once said resident code object is identified by said object identifier (505).

9. The method of any preceding claim, wherein said download code object is downloaded within a cable television system.

10. The method of any preceding claim, wherein said download code object is enabled.

11. A system for managing multiple versions of a code object comprising:
a headend (201) and a set-top terminal (202),
wherein said set-top terminal (202) receives a download instruction message (501) from said headend (201), and compares (506) said download version number with a resident version number,
wherein said download instruction message includes a download version number and a purge enable flag (404), said download version number specifying the version of a download code object and said resident version number specifying the version of a resident code object, said resident code object being present within memory (212) of said set-top terminal (202), and
wherein when the comparison (506) concludes that said download version number and said resident version number are different, said set-top terminal (202) receives said download code object (507) from said headend (201) and deletes said resident code object from said memory (212), said headend (201) using said purge enable flag (404) for instructing said set-top terminal (202) to delete said resident code object from said memory (212).

12. The system of claim 11, wherein said headend (201) controls the deletion of said resident code object from said memory (212).

13. The system of claim 11, wherein said set-top terminal (202) deletes said resident code object from said memory (212) after receiving said download code object (507) from said headend (201).

14. The system of any of claims 11 to 13, wherein said comparison (506) is performed when said resident code object is located within said memory (212).

15. The system of any of claims 11 to 14, wherein said set-top terminal (202) receives said purge enable flag (404).

16. The system of any of claims 11 to 15, wherein when the comparison (506) concludes that said download version number and said resident version number are identical, said set-top terminal (202) abstains from downloading said download code object.

17. The system of any of claims 11 to 16, wherein prior to the comparison (506), said set-top terminal (202) determines (502) if said download instruction message includes said download version number and determines (505) if a resident code object is present within memory (212) of said set-top terminal (202).

18. The system of any of claims 11 to 17, wherein said download instruction message includes an object identifier, and wherein the comparison (506) is performed once said resident code object is identified by said object identifier (505).

19. The system of any of claims 11 to 18, wherein said download code object is downloaded within a cable television system.

20. The system of any of claims 11 to 19, wherein said download code object is enabled.

## Patentansprüche

1. Ein Verfahren zum Verwalten von mehreren Versionen eines Codeobjekts, die auf ein Set-Top-Terminal (202) heruntergeladen werden, wobei das Verfahren Folgendes beinhaltet:
Empfangen (501) einer Befehlsnachricht zum Herunterladen von einer Kopfstelle (201), wobei das Set-Top-Terminal (202) die Befehlsnachricht (501) zum Herunterladen empfängt, wobei die Befehlsnachricht zum Herunterladen eine Versionsnummer zum Herunterladen und einen Säuberungs-Freigabemerker (404) umfasst; und
Vergleichen (506) der Versionsnummer zum Herunterladen mit einer residenten Versionsnummer, wobei das Set-Top-Terminal (202) die Versionsnummer zum Herunterladen mit einer residenten Versionsnummer vergleicht, wobei die Versionsnummer zum Herunterladen die Version eines Codeobjekts zum Herunterladen spezifiziert und die residente Versionsnummer die Version eines residenten Codeobjekts spezifiziert, wobei das residente Codeobjekt innerhalb eines Speichers (212) des Set-Top-Terminats (202) vorliegt,
wobei, wenn der Schritt des Vergleichens (506) zum Schluss kommt, dass die Versionsnummer zum Herunterladen und die residente Versionsnummer unterschiedlich sind, das Set-Top-Terminal (202) das Codeobjekt (507) zum Herunterladen von der Kopfstelle (201) empfängt und das residente Codeobjekt aus dem Speicher (212) löscht, wobei die Kopfstelle (201) den Säuberungs-Freigabemerker (404) verwendet, um das Set-Top-Terminal (202) anzuweisen, das residente Codeobjekt aus dem Speicher (212) zu löschen.

2. Verfahren gemäß Anspruch 1, wobei die Kopfstelle (201) die Löschung des residenten Codeobjekts aus dem Speicher (212) steuert.

3. Verfahren gemäß Anspruch 1 oder Anspruch 2, wobei das Set-Top-Terminal (202) nach dem Empfangen des Codeobjekts (507) zum Herunterladen von der Kopfstelle (201) das residente Codeobjekt aus dem Speicher (212) löscht.

4. Verfahren gemäß einem der vorhergehenden Ansprüche, wobei der Schritt des Vergleichens (506) durchgeführt wird, wenn sich ein residentes Codeobjekt innerhalb des Speichers (212) befindet.

5. Verfahren gemäß einem der vorhergehenden Ansprüche, wobei das Set-Top-Terminal (202) den Säuberungs-Freigabemerker (404) empfängt.

6. Verfahren gemäß einem der vorhergehenden Ansprüche, wobei das Set-Top-Terminal (202) auf das Herunterladen des Codeobjekts zum Herunterladen verzichtet, wenn der Schritt des Vergleichens (506) zum Schluss kommt, dass die Versionsnummer zum Herunterladen und die residente Versionsnummer identisch sind.

7. Verfahren gemäß einem der vorhergehenden Ansprüche, wobei das Set-Top-Terminal (202) vor dem Schritt des Vergleichens (506) bestimmt (502), ob die Befehlsnachricht zum Herunterladen die Versionsnummer zum Herunterladen umfasst und bestimmt (505), ob ein residentes Codeobjekt innerhalb des Speichers (212) des Set-Top-Terminals (202) vorliegt.

8. Vefahren. gemäß einem der vorhergehenden Ansprüche, wobei die Befehlsnachricht zum Herunterladen einen Objekt-Identifikator umfasst, und wobei der Schritt des Vergleichens der Versionsnummer zum Herunterladen mit der residenten Versionsnummer (506) durchgeführt wird, sobald das residente Codeobjekt durch den Objekt-Identifikator (505) identifiziert ist.

9. Verfahren gemäß einem der vorhergehenden Ansprüche, wobei das Codeobjekt zum Herunterladen innerhalb einer Kabelfernsehanlage heruntergeladen wird.

10. Verfahren gemäß einem der vorhergehenden Ansprüche, wobei das Codeobjekt zum Herunterladen freigegeben ist.

11. Ein System zum Verwalten mehrerer Versionen eines Codeobjekts, das Folgendes beinhaltet:
eine Kopfstelle (201) und ein Set-Top-Terminal (202),
wobei das Set-Top-Terminal (202) eine Befehlsnachricht (501) zum Herunterladen von der Kopfstelle (201) empfängt und die Versionsnummer zum Herunterladen mit einer residenten Versionsnummer vergleicht (506),
wobei die Befehlsnachricht zum Herunterladen eine Versionsnummer zum Herunterladen und einen Säuberungs-Freigabemerker (404) umfasst, wobei die Versionsnummer zum Herunterladen die Version eines Codeobjekts zum Herunterladen spezifiziert, und die residente Versionsnummer die Version eines residenten Codeobjekts spezifiziert, wobei das residente Codeobjekt innerhalb des Speichers (212) des Set-Top-Terminals (202) vorliegt, und
wobei, wenn der Vergleich (506) zum Schluss kommt, dass die Versionsnummer zum Herunterladen und die residente Versionsnummer unterschiedlich sind, das Set-Top-Terminal (202) das Codeobjekt (507) zum Herunterladen von der Kopfstelle (201) empfängt und das residente Codeobjekt aus dem Speicher (212) löscht, wobei die Kopfstelle (201) den Säuberungs-Freigabemerker (404) verwendet, um das Set-Top-Terminal (202) anzuweisen, das residente Codeobjekt aus dem Speicher (212) zu löschen.

12. System gemäß Anspruch 11, wobei die Kopfstelle (201) die Löschung des residenten Codeobjekts aus dem Speicher (212) steuert.

13. System gemäß Anspruch 11, wobei das Set-Top-Terminal (202) das residente Codeobjekt nach dem Empfangen des Codeobjekts (507) zum Herunterladen von der Kopfstelle (201) aus dem Speicher (212) löscht.

14. System, gemäß einem der Ansprüche 11 bis 13, wobei der Vergleich (506) durchgeführt wird, wenn sich das residente Codeobjekt innerhalb des Speichers (212) befindet.

15. System gemäß einem der Ansprüche 11 bis 14, wobei das Set-Top-Terminal (202) den Säuberungs-Freigabemerker (404) empfängt.

16. System gemäß einem der Ansprüche 11 bis 15, wobei das Set-Top-Terminal (202) auf das Herunterladen des Codeobjekts zum Herunterladen verzichtet, wenn der Vergleich (506) zum Schluss kommt, dass die Versionsnummer zum Herunterladen und die residente Versionsnummer identisch sind.

17. System gemäß einem der Ansprüche 11 bis 16, wobei das Set-Top-Terminal (202) vor dem Vergleich (506) bestimmt (502), ob die Befehlsnachricht zum Herunterladen die Versionsnummer zum Herunterladen umfasst und bestimmt (505), ob ein residentes Codeobjekt innerhalb des Speichers (212) des Set-Top-Terminals (202) vorliegt.

18. System gemäß einem der Ansprüche 11 bis 17, wobei die Befehlsnachricht zum Herunterladen einen Objekt-Identifikator umfasst, und wobei der Vergleich (506) durchgeführt wird, sobald das residente Codeobjekt durch den Objekt-Identifikator (505) identifiziert ist.

19. System gemäß einem der Ansprüche 11 bis 18, wobei das Codeobjekt zum Herunterladen innerhalb einer Kabelfernsehanlage heruntergeladen wird.

20. System gemäß einem der Ansprüche 11 bis 19, wobei das Codeobjekt zum Herunterladen freigegeben ist.

## Revendications

1. Une méthode de gestion de versions multiples d'un objet de code lors de son téléchargement sur un terminal set-top (202), la méthode comportant :
la réception (501) d'un message d'instruction de téléchargement d'une tête de réseau (201), ledit terminal set-top (202) recevant ledit message d'instruction de téléchargement (501), ledit message d'instruction de téléchargement comprenant un numéro de version de téléchargement et un indicateur de validation de purge (404) ; et
la comparaison (506) dudit numéro de version de téléchargement avec un numéro de version résidente, ledit terminal set-top (202) comparant ledit numéro de version de téléchargement avec un numérote version résidente, ledit numéro de version de téléchargement spécifiant la version d'un objet de code de téléchargement et ledit numéro de version résidente spécifiant la version d'un objet de code résident, ledit objet de code résident étant présent au sein de la mémoire (212) dudit terminal set-top (202),
dans laquelle ladite étape de comparaison (506) conclut que ledit numéro de version de téléchargement et ledit numéro de version résidente sont différents, ledit terminal set-top (202) reçoit ledit objet de code de téléchargement (507) de ladite tête de réseau (201) et supprime ledit objet de code résident de ladite mémoire (212), ladite tête de réseau (201) utilisant ledit indicateur de validation de purge (404) pour donner audit terminal set-top (202) l'instruction de supprimer ledit objet de code résident de ladite mémoire (212).

2. La méthode de la revendication 1, dans laquelle ladite tête de réseau (201) commande la suppression dudit objet de code résident de ladite mémoire (212).

3. La méthode de la revendication 1 ou de la revendication 2, dans laquelle ledit terminal set-top (202) supprime ledit objet de code résident de ladite mémoire (212) après réception dudit objet de code de téléchargement (507) de ladite tête de réseau (201).

4. La méthode de n'importe quelle revendication précédente, dans laquelle ladite étape de comparaison (506) est effectuée lorsqu'un objet de code résident est localisé au sein de ladite mémoire (212).

5. La méthode de n'importe quelle revendication précédente, dans laquelle ledit terminal set-top (202) reçoit ledit indicateur de validation de purge (404).

6. La méthode de n'importe quelle revendication précédente, dans laquelle, lorsque ladite étape de comparaison (506) conclut que ledit numéro de version de téléchargement et ledit numéro de version résidente sont identiques, ledit terminal set-top (202) s'abstient de télécharger ledit objet de code de téléchargement.

7. La méthode de n'importe quelle revendication précédente, dans laquelle, avant ladite étape de comparaison (506), ledit terminal set-top (202) détermine (502) si ledit message d'instruction de téléchargement comprend ledit numéro de version de téléchargement et détermine (505) si un objet de code résident est présent au sein de la mémoire (212) dudit terminal set-top (202).

8. La méthode de n'importe quelle revendication précédente, dans laquelle ledit message d'instruction de téléchargement comprend un identificateur d'objet, et dans laquelle ladite étape de comparaison dudit numéro de version de téléchargement avec ledit numéro de version résidente (506) est effectuée une fois que ledit objet de code résident est identifié par ledit identificateur d'objet (505).

9. La méthode de n'importe quelle revendication précédente, dans laquelle ledit objet de code de téléchargement est téléchargé au sein d'un système de télévision câblée.

10. La méthode de n'importe quelle revendication précédente, dans laquelle ledit objet de code de téléchargement est validé.

11. Un système pour gérer des versions multiples d'un objet de code, comportant :
une tête de réseau (201) et un terminal set-top (202),
dans lequel ledit terminal set-top (202) reçoit un message d'instruction de téléchargement (501) de ladite tête de réseau (201), et compare (506) ledit numéro de version de téléchargement avec un numéro de version résidente,
dans lequel ledit message d'instruction de téléchargement comprend un numéro de version de téléchargement et un indicateur de validation de purge (404), ledit numéro de version de téléchargement spécifiant la version d'un objet de code de téléchargement et ledit numéro de version résidente spécifiant la version d'un objet de code résident, ledit objet de code résident étant présent au sein de la mémoire (212) dudit terminal set-top (202), et
dans lequel, lorsque la comparaison (506) conclut que ledit numéro de version de téléchargement et ledit numéro de version résidente sont différents, ledit terminal set-top (202) reçoit ledit objet de code de téléchargement (507) de ladite tête de réseau (201) et supprime ledit objet de code résident de ladite mémoire (212), ladite tête de réseau (201) utilisant ledit indicateur de validation de purge (404) pour donner audit terminal set-top (202) l'instruction de supprimer ledit objet de code résident de ladite mémoire (212).

12. Le système de la revendication 11, dans lequel ladite tête de réseau (201) commande la suppression dudit objet de code résident de ladite mémoire (212).

13. Le système de la revendication 11, dans lequel ledit terminal set-top (202) supprime ledit objet de code résident de ladite mémoire (212) après réception dudit objet de code de téléchargement (507) de ladite tête de réseau (201).

14. Le système de n'importe lesquelles des revendications 11 à 13, dans lequel ladite comparaison (506) est effectuée lorsque ledit objet de code résident est localisé au sein de ladite mémoire (212).

15. Le système de n'importe lesquelles des revendications 11 à 14, dans lequel ledit terminal set-top (202) reçoit ledit indicateur de validation de purge (404).

16. Le système de n'importe lesquelles des revendications 11 à 15, dans lequel, lorsque la comparaison (506) conclut que ledit numéro de version de téléchargement et ledit numéro de version résidente sont identiques, ledit terminal set-top (202) s'abstient de télécharger ledit objet de code dé téléchargement.

17. Le système de n'importe lesquelles des revendications 11 à 16, dans lequel, avant la comparaison (506), ledit terminal set-top (202) détermine (502) si ledit message d'instruction de téléchargement comprend ledit numéro de version de téléchargement et détermine (505) si un objet de code résident est présent au sein de la mémoire (212) dudit terminal set-top (202).

18. Le système de n'importe lesquelles des revendications 11 à 17, dans lequel ledit message d'instruction de téléchargement comprend un identificateur d'objet, et dans lequel la comparaison (506) est effectuée une fois que ledit objet de code résident est identifié par ledit identificateur d'objet (505).

19. Le système de n'importe lesquelles des revendications 11 à 18, dans lequel ledit objet de code de téléchargement est téléchargé au sein d'un système de télévision câblée.

20. Le système de n'importe lesquelles des revendications 11 à 19, dans lequel ledit objet de code de téléchargement est validé.
